# EUROPÄISCHE PATENTSCHRIFT

(11) **EP 1 793 114 B1**
(45) Veröffentlichungstag und Bekanntmachung des Hinweises auf die Patenterteilung: **15.05.2013**
(21) Anmeldenummer: 06025075.0
(22) Anmeldetag: 04.12.2006
(51) Int. Cl.: F02M 25/07

(54) **Vorrichtung, insbesondere Abgasrückführventileinrichtung, zum Steuern oder Regeln eines Fluidstroms**
Apparatus, in particular exhaust gas recirculation valve device, for controlling a fluid flow
Appareil, en particulier vanne de recyclage des gaz d'échappement, pour commander un courant de fluide

(30) Priorität: 02.12.2005 DE 102005058494; 12.04.2006 DE 102006017608; 13.11.2006 DE 102006053755
(43) Veröffentlichungstag der Anmeldung: 06.06.2007
(73) Patentinhaber: Behr Thermot-tronik GmbH, 70806 Kornwestheim (DE)
(72) Erfinder: Klein, Hans-Peter, 71397 Leutenbach (DE); Kunz, Torsten-André, 74395 Mundelsheim (DE); Richter, Wolfgang, Dipl.-Ing., 70806 Kornwestheim (DE)
(74) Vertreter: Grauel, Andreas

(56) Entgegenhaltungen:
- EP-A- 0 994 247
- EP-A- 1 126 156
- EP-A- 1 362 985
- EP-A- 1 363 013
- EP-A- 1 378 655
- WO-A-01/83975
- WO-A-2005/113972
- DE-A1- 2 539 484
- DE-A1- 10 025 877
- DE-C1- 19 961 756
- DE-T2- 69 823 549
- US-A- 5 606 957

## Beschreibung

Die Erfindung betrifft eine Abgasrückführventileinrichtung zum Steuern oder Regeln eines Fluidstroms, insbesondere eines Abgasstroms, mit einem Ventilgehäuse, das einen Eingang für den Fluidstrom, einen Wärmeübertragerausgang und einen Bypassausgang aufweist, und mit genau einem Schließelement, das mit Hilfe einer Antriebseinrichtung, die mindestens ein Antriebselement umfasst, in dem Ventilgehäuse hin und her bewegbar ist. Die Erfindung betrifft des Weiteren eine Vorrichtung zur Steuerung eines Abgasstroms, aufweisend zumindest ein Verschlusselement oder Schließelement zum Verschließen zumindest eines Strömungskanals für Abgas, wobei das zumindest eine Verschlusselement an zumindest einem translatorisch bewegbaren Kopplungsschieberelement oder Schieberlement zur Bewegung des Verschlusselements zwischen zumindest zwei Positionen angeordnet ist. Die Erfindung betrifft des Weiteren eine Vorrichtung, insbesondere ein Doppelventil, für eine Einrichtung zur Abgasrückführung, die beziehungsweise das zwei mit einem gemeinsamen Antrieb gegensinnig antreibbare Ventilelemente oder Schließelemente enthält, von welchen eines einem Strömungsweg mit einem Abgaskühler und das andere einem Strömungsweg ohne Abgaskühler zugeordnet ist und von welchen abhängig von der Antriebsrichtung nur jeweils eines aus seiner Schließstellung heraus bewegbar ist. Die Erfindung betrifft des Weiteren einen Wärmetauscher zur Abgäskühlung. Die Erfindung betrifft des Weiteren ein System mit einer vorab beschriebenen Vorrichtung und/oder mit einem vorab beschriebenen Wärmetauscher.

In herkömmlichen Abgassystemen wird zum Regeln des Abgasstroms ein Abgasregelventil verwendet. Zum Verteilen des Abgases wird eine Abgasklappe verwendet, die den Abgasstrom entweder durch den Kühler oder durch einen Bypass am Kühler vorbei leitet.

Aktuelle Anforderungen an die Schadstoffemission, insbesondere von Dieselmotoren, aber auch von Otto-Motoren, haben zu der Entwicklung von Abgas-Rückführsystemen für Verbrennungsmotoren geführt. Das rückgeführte Abgas ist dabei allgemein mittels eines Abgaskühlers zu kühlen, wobei zur Sicherstellung der Funktion die Abgasmenge des rückgeführten Abgases zur regeln ist, sowie die Regelung der Rückführung des Abgases durch zumindest einen Abgaskühler und/oder durch eine Bypass-Leitung parallel zu dem zumindest einen Abgaskühler zu regeln ist. Die Problematik besteht darin, den heißen und chemisch aggressiven Abgasstrom sowohl in der Dosierung als auch in der Verzweigung auf Abgaskühler oder Bypass zu regeln.

Aus der DE 698 23 549 T2 ist ein Ventil zur Prüfung der Menge der in einem Abgas-Rückführsystem eines Verbrennungsmotors rückgeführten Abgases bekannt, das als in einer Leitung angeordnetes Verschlussventil ausgebildet ist, welches drehbare Antriebsmittel und eine Nocke aufweist, um ausgehend von den drehbaren Antriebsmitteln des Verschlussventils von seiner geschlossenen Stellung in eine geöffnete Stellung und umgekehrt anzutreiben, wobei es einen Kipphebel, der in Drehung fest mit der Abtriebswelle der drehbaren Antriebsmitte verbunden ist, eine Querachse, die in Translationsrichtung fest mit dem Verschlussventil verbunden ist, aber in Bezug auf dieses Verschlussventil drehbeweglich ist und in Drehung fest mit dem Kipphebel verbunden ist sowie ortsfeste schraubenförmige Führungsnuten aufweist, in die die Enden der Querachse eingeführt sind. Die Querachse wird dabei vom Motor in Drehung versetzt. Ihre Enden folgen den schraubenförmigen Nuten, wodurch eine Translationsbewegung erzeugt wird, die auf das Verschlusssystem übertragen wird. Dieses nimmt also eine axiale Stellung ein, die vom Drehwinkel der drehbaren Antriebsmittel abhängt.

Ferner ist aus der EP 137 86 55 A2 ein Ventil bekannt, welches einen Aktuator aufweist, der den Ventilschaft in Rotation versetzt, um ein Ventilelement in axialer Richtung zu bewegen. An dem Ventilschaft ist ein Stift angeordnet, der sich in einem Schlitz des Ventilgehäuses bewegt. An den Enden des Stifts ist jeweils ein Kugellager angeordnet. Diese dienen zur Reduzierung der Reibungsverluste, die zwischen dem Stift und der Führungsbahn im Ventilgehäuse auftreten würden.

Bei einer bekannten Vorrichtung der eingangs genannten Art (EP 0 994 247 B1) sind zwei Ventilelemente auf einer gemeinsamen Betätigungsstange angeordnet, die quer zu zwei Strömungswegen verläuft. Zwischen den beiden Strömungswegen ist ein dritter Strömungsweg vorgesehen, der durch die beiden Ventilelemente gegenüber den beiden Strömungswegen absperrbar ist und der zu einer Lufteinlassleitung führt. Die Ventilelemente sind so auf der Betätigungsstange angeordnet, dass jeweils eines von der Betätigungsstange aus der Schließstellung heraus bewegbar ist, während das andere in der Schließstellung verbleibt. Bei dieser Bauart durchdringt die axial verschiebbare Betätigungsstange eine Seitenwand eines Strömungsweges sowie beide Ventilelemente. Es müssen deshalb drei Dichtungen vorgesehen werden, die ein axiales Verschieben der Betätigungsstange gestatten, jedoch möglichst kein Abgas hindurch lassen. Weitere Ventileinrichtungen sind aus der internationalen Patentanmeldung WO 99/31372 und der US-Patentanmeldung US 2004/0069285 A1 bekannt.

Weitere Abgasrückführventileinrichtungen sind in der EP 1 363 013 A1, DE 100 25 877 A1, WO 2005/113972 A1 und EP 1 362 985 A2 offenbart.

Aufgabe der Erfindung ist es eine verbesserte Vorrichtung gemäß dem Oberbegriff des Anspruchs 1 zu schaffen, die einfach aufgebaut und kostengünstig herstellbar ist.

Die Aufgabe ist bei einer Abgasrückführventileinrichtung zum Steuern oder Regeln eines Fluidstroms, insbesondere eines Abgasstroms, mit einem Ventilgehäuse, das einen Eingang für den Fluidstrom, einen Wärmeübertragerausgang und einen Bypassausgang aufweist, und mit mindestens einem Schließelement, das mit Hilfe einer Antriebseinrichtung, die mindestens ein Antriebselement umfasst, in dem Ventilgehäuse hin und her bewegbar ist, dadurch gelöst, dass das Antriebselement so mit dem Schließelement gekoppelt ist, dass eine Drehbewegung des Antriebselements in eine translatorische Bewegung des Schließelements umgesetzt wird. Dadurch ist es möglich, mit nur einem Antriebselement, das auch als Aktuator bezeichnet wird, das Schließelement stufenlos anzusteuern.

Ein bevorzugtes Ausführungsbeispiel der Vorrichtung ist dadurch gekennzeichnet, dass das Schließelement zwischen einer Schließstellung, in der sowohl der Wärmeübertragerausgang als auch der Bypassausgang durch das Schließelement verschlossen sind, und einer Bypassöffnungsstellung, in welcher der Bypassausgang offen und der Wärmeübertragerausgang durch das Schließelement verschlossen ist, und einer Wärmeübertrageröffnungsstellung, in welcher der Wärmeübertragerausgang offen und der Bypassausgang durch das Schließelement verschlossen ist, translatorisch bewegbar ist. Gemäß einem Aspekt der Erfindung können mit einem einzigen Schließelement verschiedene Abgasströme stufenlos genau gesteuert werden.

Erfindungsgemäß ist der Öffnungsquerschnitt des Bypassausgangs durch das Schließelement stufenlos variierbar, während der Wärmeübertragerausgang durch das Schließelement verschlossen ist.

Dabei ist der Öffnungsquerschnitt des Wärmeübertragerausgangs durch das Schließelement stufenlos variierbar, während der Bypassausgang durch das Schließelement verschlossen ist. Gemäß der Erfindung werden die drei unterschiedlichen Stellungen mit nur einem einzigen Schließelement realisiert.

Erfindungsgemäß ist das Schließelement durch mindestens eine Federeinrichtung in eine Nulllage vorgespannt, in der sowohl der Wärmeübertragerausgang als auch der Bypassausgang durch das Schließelement verschlossen sind. Dadurch wird auf einfache Art und Weise eine Fail-Safe-Funktion ermöglicht.

Ein weiteres bevorzugtes Ausführungsbeispiel der Vorrichtung ist dadurch gekennzeichnet, dass die Antriebseinrichtung ein Antriebsformschlusselement, insbesondere ein Antriebszahnrad oder ein Antriebszahnradsegment, umfasst, das drehbar angetrieben ist. Das Antriebsformschlusselement dient dazu, eine Drehbewegung des Antriebselements in eine translatorische Bewegung eines Kopplungselements umzusetzen.

Ein weiteres bevorzugtes Ausführungsbeispiel der Vorrichtung ist dadurch gekennzeichnet, dass das Antriebsformschlusselement drehfest mit einer Antriebswelle verbunden ist. Die drehfeste Verbindung kann zum Beispiel durch eine Wellen-Naben-Verbindung realisiert werden.

Ein weiteres bevorzugtes Ausführungsbeispiel der Vorrichtung ist dadurch gekennzeichnet, dass sich das Antriebsformschlusselement mit einem Kopplungsformschlusselement, insbesondere einem Kopplungszahnstangenelement, in Eingriff befindet, das translatorisch bewegbar und mit dem Schließelement gekoppelt ist. Das Kopplungsformschlusselement ist zum Beispiel durch eine Schubstange mit dem Schließelement verbunden.

Ein weiteres bevorzugtes Ausführungsbeispiel der Vorrichtung ist dadurch gekennzeichnet, dass die Antriebseinrichtung ein Kopplungsschieberelement umfasst, das translatorisch bewegbar und mit dem Schließelement gekoppelt ist. Das Kopplungsschieberelement weist zum Beispiel ein verlängertes Ende auf, an dem das Schließelement befestigt ist.

Ein weiteres bevorzugtes Ausführungsbeispiel der Vorrichtung ist dadurch gekennzeichnet, dass das Kopplungsschieberelement kraft-oder formschlüssig mit einer Antriebswelle gekoppelt ist. Die Kopplung ist so gestaltet, dass die Drehbewegung der Antriebswelle in eine translatorische Bewegung des Kopplungsschieberelements umgesetzt wird.

Ein weiteres bevorzugtes Ausführungsbeispiel der Vorrichtung ist dadurch gekennzeichnet, dass das Kupplungsschieberelement ein Gewinde umfasst, in das mindestens ein Eingriffselement eingreift, das an dem der Antriebswelle befestigt ist. Alternativ kann die Antriebswelle ein Gewinde aufweisen, in das ein Eingriffselement eingreift, das an dem Kupplungsschieberelement befestigt ist.

Ein weiteres bevorzugtes Ausführungsbeispiel der Vorrichtung ist dadurch gekennzeichnet, dass das Kopplungsschieberelement durch ein Verdrehsicherungselement so mit dem Ventilgehäuse gekoppelt ist, dass sich das Kopplungsschieberelement nicht in dem Ventilgehäuse verdrehen kann. Durch das Verdrehsicherungselement wird sichergestellt, dass sich das Kopplungsschieberelement nur translatorisch in dem Ventilgehäuse hin und her bewegen kann.

Die vorab angegebene Aufgabe wird für eine eingangs genannte Vorrichtung auch mit den Merkmalen des Anspruchs 10 gelöst.

Die Vorrichtung zur Steuerung eines Abgasstroms, insbesondere ein Ventil, weist zumindest ein Verschlusselement zum Verschließen zumindest eines Strömungskanals für Abgas auf, wobei das zumindest eine Verschlusselement an zumindest einem translatorisch bewegbaren Schieberelement zur Bewegung des Verschlusselements zwischen zumindest zwei Positionen angeordnet ist. Das Schieberelement weist zumindest ein Nuteingriffssegment auf, welches zumindest bereichsweise in zumindest eine schraubenförmige Nut einer drehbaren Antriebswelle, welche insbesondere durch eine Antriebseinheit wie beispielsweise durch einen Elektromotor antreibbar ist, eingreifend ausgebildet ist. Insbesondere kann in die drehbare Antriebswelle die Nut schraubenförmig eingebracht sein, insbesondere kann die Nut, welche in die drehbare Antriebswelle eingebracht ist, eine Schraubenlinie beschreiben. Das zumindest eine Nuteingriffssegment des Schieberelements kann sich dabei in der schraubenförmigen Nut der drehbaren Antriebswelle bewegen.

In einer vorteilhaften Ausgestaltung weist die Antriebswelle zumindest einen zylindrisch geformten Abschnitt auf, in den die schraubenförmige Nut eingebracht ist. Die schraubenförmige Nut kann dabei besonders vorteilhaft durch ein abtragendes Fertigungsverfahren wie beispielsweise Fräsen, Schleifen, Erodieren usw. in den zylindrisch geformten Abschnitt der Antriebswelle eingebracht werden.

Ferner kann vorgesehen sein, dass das Schieberelement zumindest eine Bohrung aufweist, in die der zylindrisch geformte Abschnitt der Antriebswelle zumindest abschnittweise eingreift. Auf diese Weise kann die Antriebswelle besonders vorteilhaft in das Schieberelement eingeführt bzw. in diesem bewegt werden.

In einer vorteilhaften Weiterbildung weist das Schieberelement zumindest eine Schieberelementbohrung auf, in die zumindest ein Nuteingriffssegment eingebracht ist. Auf diese Weise kann das zumindest eine Nuteingriffssegment besonders vorteilhaft mit dem Schieberelement verbunden werden.

Eine weitere vorteilhafte Ausgestaltung ist dadurch ausgebildet, dass das Nuteingriffssegment stiftartig ausgebildet ist. Auf diese Weise ist das Nuteingriffssegment besonders vorteilhaft einfach und kostengünstig herstellbar.

In einer vorteilhaften Weiterbildung ist das Schieberelement drehfest angeordnet. Auf diese Weise kann eine Drehbewegung des Schieberelements, die zu einer Reibbelastung oder zu einer falschen Position des Schieberelements führen kann, besonders vorteilhaft werden.

Weiterhin kann besonders bevorzugt vorgesehen werden, dass das Schieberelement zumindest eine Schieberelementnut zur Aufnahme eines Verdrehsicherungselements aufweist. Auf diese Weise kann das Verdrehen des Schieberelements besonders vorteilhaft, einfach und kostengünstig verhindert werden.

Ferner kann vorgesehen sein, dass zumindest ein Verschlusselement kolbenartig ausgebildet ist. Dabei kann das Verschlusselement besonders vorteilhaft als Kolben ausgebildet sein und auf diese Weise besonders einfach hergestellt werden.

Bei einer weiteren vorteilhaften Ausgestaltung ist zumindest eine Feder auf dem Schieberelement angeordnet, welche derart ausgebildet und eingerichtet ist, dass sie das Verschlusselement bei Notbetrieb zu bewegen vermag. Auf diese Weise kann besonders vorteilhaft sichergestellt werden, dass bei Versagen der Antriebseinheit und/oder der Antriebswelle das Verschlusselement in eine sichere Position bewegbar ist, so dass das Ventil beispielsweise geschlossen oder geöffnet ist.

In einer vorteilhaften Weiterbildung ist die Vorrichtung als Ventil mit zumindest einem Ventilgehäuse ausgebildet.

Ein alternative nicht erfindungsgemäße Vorrichtung ist dadurch gekennzeichnet, dass das Antriebselement so mit mindestens einem ersten und einem zweiten Schließelement gekoppelt ist, dass eine Drehbewegung des Antriebselements in mindestens eine translatorische Bewegung eines der Schließelemente umgesetzt wird. Gemäß einem weiteren Aspekt der Erfindung werden mit nur einem einzigen Antriebselement, das auch als Aktuator bezeichnet wird, zwei Schließelemente angetrieben.

Eine weitere nicht erfindungsgemäße Vorrichtung ist dadurch gekennzeichnet, dass das erste Schließelement zwischen einer Schließstellung, in welcher der Bypassausgang durch das erste Schließelement verschlossen ist, und einer Bypassöffnungsstellung, in welcher der Bypassausgang offen ist, translatorisch bewegbar ist, während der Wärmeübertragerausgang durch das zweite Schließelement verschlossen ist.

Eine weitere nicht erfindungsgemäße Vorrichtung ist dadurch gekennzeichnet, dass der Öffnungsquerschnitt des Bypassausgangs durch das erste Schließelement stufenlos variierbar ist, während der Wärmeübertragerausgang durch das zweite Schließelement verschlossen ist.

Eine weitere nicht erfindungsgemäße Vorrichtung ist dadurch gekennzeichnet, dass das zweite Schließelement zwischen einer Schließstellung, in welcher der Wärmeübertragerausgang durch das zweite Schließelement verschlossen ist, und einer Wärmeübertrageröffnungsstellung, in welcher der Wärmeübertragerausgang offen ist, translatorisch bewegbar ist, während der Bypassausgang durch das erste Schließelement verschlossen ist.

Eine weitere nicht erfindungsgemäße Vorrichtung ist dadurch gekennzeichnet, dass der Öffnungsquerschnitt des Wärmeübertragerausgangs durch das zweite Schließelement stufenlos variierbar ist, während der Bypassausgang durch das erste Schließelement verschlossen ist.

Eine weitere nicht erfindungsgemäße Vorrichtung ist dadurch gekennzeichnet, dass die Schließelemente durch mindestens eine Federeinrichtung in eine Nulllage vorgespannt sind, in der sowohl der Wärmeübertragerausgang als auch der Bypassausgang durch die Schließelemente verschlossen sind.

Eine weitere nicht erfindungsgemäße Vorrichtung ist dadurch gekennzeichnet, dass die Antriebseinrichtung ein Antriebswellenende umfasst, das ein Außengewinde aufweist, das sich mit einem Innengewinde in Eingriff befindet, das an einem Mitnehmerelement vorgesehen ist, das translatorisch bewegbar und mit den Schließelementen gekoppelt ist. Je nach Drehrichtung des Antriebswellenendes öffnet das erste oder das zweite Schließelement.

Eine weitere nicht erfindungsgemäße Vorrichtung ist dadurch gekennzeichnet, dass das Mitnehmerelement zwei Mitnehmerstangen aufweist, die mit jeweils einem der Schließelemente gekoppelt sind.

Ferner wird ein Wärmetauscher zur Abgaskühlung mit zumindest einer Vorrichtung nach einem der Ansprüche 1 bis 20 vorgeschlagen.

Weiter wird ein System mit zumindest einer Vorrichtung nach einem der Ansprüche 1 bis 20 und/oder mit zumindest einem Wärmetauscher nach Anspruch 21 vorgeschlagen, das zumindest einen Verbrennungsmotor für ein Fahrzeug aufweist, das zumindest eine erste Turbine eines Abgasturboladers aufweist, wobei die Vorrichtung zur Steuerung des Abgasstroms zuströmseitig oder abströmseitig des Wärmetauschers auf der Hochdruckseite der ersten Turbine angeordnet ist.

Es wird weiter ein System mit zumindest einer Vorrichtung nach einem der Ansprüche 1 bis 20 und/oder mit zumindest einem Wärmetauscher nach Anspruch 21 vorgeschlagen, der zumindest einen Verbrennungsmotor für ein Fahrzeug, zumindest eine erste Turbine eines Abgasturboladers aufweist, wobei die Vorrichtung zur Steuerung des Abgasstroms zuströmseitig oder abströmseitig des Wärmetauschers auf der Niederdruckseite der ersten Turbine angeordnet ist.

Weitere vorteilhafte Ausgestaltungen der Erfindung ergeben sich aus den Unteransprüchen und aus der Zeichnung. Die Gegenstände der Unteransprüche beziehen sich sowohl auf die erfindungsgemäße Vorrichtung zur Steuerung eines Abgasstroms sowie auf den erfindungsgemäßen Wärmetauscher zur Abgaskühlung sowie auf ein System.

Ausführungsbeispiele der Erfindung sind in der Zeichnung dar gestellt und werden im Folgenden näher erläutert, wobei eine Beschränkung der Erfindung hierdurch nicht erfolgen soll. Es zeigen:
- Figur 1: eine Schnittdarstellung B-B einer Vorrichtung zur Steuerung eines Abgasstroms;
- Figur 2: eine weitere Schnittdarstellung A-A einer Vorrichtung zur Steuerung eines Abgasstroms mit einer Verdrehsicherung des Schieberelements;
- Figur 3: eine Antriebswelle mit einem zylinderförmig ausgebildeten Abschnitt, in dem eine schraubenförmige Nut eingebracht ist;
- Figur 4: eine Seitenansicht der Vorrichtung zur Steuerung eines Abgasstroms;
- Figur 5: eine schematische Darstellung eines Systems mit einem Abgaswärmetauscher und einem Ventil auf der Hochdruckseite mit einstufiger Aufladung:
- Figur 6: eine schematische Darstellung eines Systems mit einem Abgaswärmetauscher und einem Ventil auf der Hochdruckseite mit zweistufiger Aufladung;
- Figur 7: eine schematische Darstellung eines Systems mit einem Wärmetauscher und einem Ventil, auf der Niederdruckseite mit einstufiger Aufladung;
- Figur 8: eine schematische Darstellung eines Systems mit einem Wärmetauscher und einem Ventil auf der Niederdruckseite mit zweistufiger Aufladung;
- Figur 9: eine weitere Schnittdarstellung einer ähnlichen Vorrichtung zur Steuerung eines Abgasstroms, wie sie in Figur 2 gezeigt ist;
- Figur 10: eine weitere Ausführungsform einer Vorrichtung zur Steuerung eines Abgasstroms mit einer Antriebseinrichtung, die ein Zahnrad und eine Zahnstange umfasst und

- Figur 11: einen axialen Schnitt durch ein alternatives Beispiel eines Doppelventils.

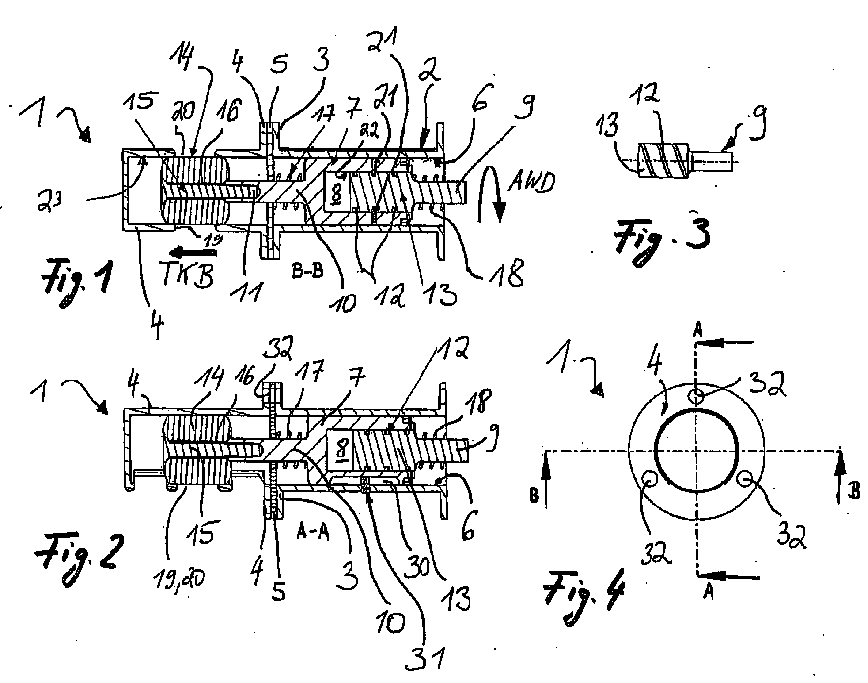

Figur 1 zeigt eine Schnittdarstellung B-B einer Vorrichtung zur Steuerung eines Abgasstroms 1.

Die Vorrichtung zur Steuerung eines Abgasstroms ist insbesondere als Ventil 1 ausgebildet. Das Ventil 1 weist ein Ventilgehäuse 2 mit einem ersten Ventilgehäuseteil 3 und zumindest einem zweiten Ventilgehäuseteil 4 auf. Das erste Ventilgehäuseteil 3 ist als Hohlzylinder ausgebildet, der an einem Ende einen ersten nicht mehr bezeichneten Anschlussflansch und an dem anderen Ende einen weiteren nicht mehr bezeichneten Anschlussflansch aufweist. In einem anderen Ausführungsbeispiel ist das erste Ventilgehäuseteil 3 als Quader ausgebildet oder weist eine andere vieleckige Form auf. Das erste Ventilgehäuseteil 3 weist eine Gehäuseinnenwand 6 auf. Das erste Ventilgehäuseteil 3 ist benachbart zu einem zweiten Ventilgehäuseteil 4 angeordnet. Das erste Ventilgehäuseteil 3 und das zweite Ventilgehäuseteil 4 sind durch eine Führungsscheibe 5 voneinander beabstandet angeordnet. Das zweite Ventilgehäuseteil 4 weist ebenfalls einen nicht näher bezeichneten Anschlussflansch auf. Das zweite Ventilgehäuseteil 4 ist ebenfalls als Hohlzylinder ausgebildet. Es weist zumindest eine Öffnung auf. Ferner weist das zweite Ventilgehäuseteil 4 eine zweite Gehäuseinnenwand auf. In einem anderen Ausführungsbeispiel weist das zweite Ventilgehäuse 4 eine quadratische und/oder rechteckförmige und/oder ovale und/oder vieleckige Querschnittsfläche oder eine Querschnittsfläche aus der Kombination der zuvor genannten Formen auf.

Die Führungsscheibe 5 ist im dargestellten Ausführungsbeispiel als runde Scheibe mit einer nicht näher bezeichneten Öffnung ausgebildet. Die nicht näher bezeichnete Öffnung ist im Wesentlichen konzentrisch in der Führungsscheibe 5 angeordnet. In einem anderen Ausführungsbeispiel weist die Führungsscheibe 5 eine quadratische und/oder rechteckige und/oder vieleckige und/oder zylindrische und/oder dreieckige Form auf. Die nicht bezeichnete Öffnung kann in einem anderen Ausführungsbeispiel außerhalb der Mitte der Scheibe angeordnet sein. Ferner kann in einem anderen Ausführungsbeispiel die Führungsscheibe 5 zwei, drei, vier oder mehr als vier nicht näher bezeichnete Öffnungen aufweisen.

Das Schieberelement 7 ist im Gehäuseinneren des ersten Ventilgehäuseteils 3 angeordnet. Das Schieberelement 7 weist einen zylinderförmigen Abschnitt, insbesondere einen Zylinderabschnitt auf, der sich verjüngt und in einen Schieberelementschaft 10 übergeht. Der Schieberelementschaft 10 ist im dargestellten Ausführungsbeispiel zylinderförmig ausgebildet. Der zylinderförmig ausgebildete Schieberelementschaft 10 weist im dargestellten Ausführungsbeispiel einen geringeren Durchmesser auf als der zylinderförmig ausgebildete Abschnitt des Schieberelements 7. In einem anderen Ausführungsbeispiel weist der Schieberelementschaft 10 einen größeren Durchmesser als der zylinderförmig ausgebildete Abschnitt des Schieberelements 7 auf. In einem anderen Ausführungsbeispiel weist das Schieberelement 7 eine quadratische und/oder rechteckförmige und/oder elliptische und/oder dreieckförmige und/oder vieleckige Querschnittsfläche oder eine Querschnittsfläche aus der Kombination der zuvor genannten Formen auf. Der Schieberelementschaft 10 weist in einem anderen Ausführungsbeispiel eine quadratische und/oder rechteckförmige und/oder runde und/oder elliptische und/oder dreieckförmige und/oder vieleckförmige Querschnittsfläche oder eine Querschnittsfläche aus der Kombination der zuvor genannten Formen auf.

Das Schieberelement 7 ist derart angeordnet, dass es sich auf der Gehäuseinnenwand 6 des ersten Ventilgehäuses 3 translatorisch verschieben kann bzw. sich auf der Gehäuseinnenwand 6 translatorisch in Richtung PKB bewegen bzw. gleiten kann. In den Schieberelementschaft 10 ist eine Schieberelementschaftbohrung 11 eingebracht. Im dargestellten Ausführungsbeispiel weist die Schieberelementschaftbohrung 11 zumindest abschnittsweise ein Gewinde auf. Ein Kolben 14 ist mit dem Schieberelementschaft 10 verbunden. Das Schieberelement 7 ist einteilig mit dem Schieberelementschaft 10 ausgebildet. Im dargestellten Ausführungsbeispiel weist der Kolben 14 zumindest eine Kolbenbohrung 16 auf, durch die zumindest ein Verbindungselement 15, insbesondere eine Schraube, durchgesteckt ist und mit dem Schieberelementschaft 10 verbunden, insbesondere in den Schieberelementschaft 10 eingeschraubt ist. In einem anderen Ausführungsbeispiel ist der Kolben 14 einteilig mit dem Schieberelementschaft 10 und/oder mit dem Schieberelement 7 ausgebildet. In einem anderen Ausführungsbeispiel ist der Kolben 14 formschlüssig und/oder reibschlüssig, insbesondere durch Einpressen, und/oder oder stoffschlüssig, insbesondere durch Schweißen, Löten, Kleben usw. mit dem Schieberelementschaft 10 verbunden. In einem anderen Ausführungsbeispiel weist der Kolben 14 zwei, drei, vier, fünf oder mehr als fünf Kolbenbohrungen 16 auf, über die Verbindungselemente wie Schrauben mit dem Schieberelementschaft 10 verbunden sind.

Das zweite Ventilgehäuseteil 4 weist zumindest eine erste Gehäuseöffnung 19 und/oder zumindest eine zweite Gehäuseöffnung 20 auf. Durch die erste Gehäuseöffnung 19 und/oder die zweite Gehäuseöffnung 20 kann Medium wie beispielsweise Abgas und/oder Luft in das zweite Ventilgehäuseteil 4 eintreten bzw. einströmen. Die zweite Gehäuseöffnung 20 kann auch an einer anderen Stelle des Ventilgehäuseteils 4 angeordnet sein. Dann ist die dargestellte Gehäuseöffnung 20 verschlossen. In einem anderen Ausführungsbeispiel weist das zweite Ventilgehäuseteil 4 ein, zwei, drei, vier oder mehr als vier Gehäuseöffnungen zum Eintritt von Abgas und/oder Kühlmedium, insbesondere Kühlmittel und/oder Öl und/oder Kühlflüssigkeit auf. In einem anderen Ausführungsbeispiel sind das erste Ventilgehäuseteil 3 und/oder das zweite Ventilgehäuseteil 4 und/oder die Führungsscheibe 5 einteilig ausgebildet und/oder formschlüssig beispielsweise durch ein, zwei, drei, vier oder mehr als vier Verbindungselemente, insbesondere Schrauben und/oder stoffschlüssig, insbesondere durch Verlöten, Verschweißen, Verkleben usw., und/oder formschlüssig, beispielsweise durch Bördeln oder Verkrimpen miteinander verbunden.

Die Antriebswelle 9 weist einen Antriebswellenzylinder 13 auf, der im dargestellten Ausführungsbeispiel einen nicht näher bezeichneten größeren Durchmesser aufweist als die Antriebswelle 9. In einem anderen Ausführungsbeispiel weist der Antriebswellenzylinder 13 den gleichen Durchmesser auf wie die Antriebswelle 9 oder einen kleineren Durchmesser als die Antriebswelle 9 auf. In den Antriebswellenzylinder 13 ist im dargestellten Ausführungsbeispiel eine Nut 12 in Form einer Schraubennut 12 eingebracht. Die Schraubennut 12 wendelt sich schraubenförmig um den Antriebswellenzylinder 13. Die Schraubennut 12 ist beispielsweise mittels eines abtragenden Fertigungsverfahrens wie beispielsweise Fräsen, Drehen, Schleifen, Erodieren usw. in den Antriebswellenzylinder eingebracht. In einem anderen Ausführungsbeispiel ist die zumindest eine Schraubennut 12 mittels eines urformenden Fertigungsverfahrens wie beispielsweise beim Gießen der Antriebswelle 9 bzw. des Antriebswellenzylinders 13 in den Antriebswellenzylinder 13 eingebracht. In einem anderen Ausführungsbeispiel ist die zumindest eine Schraubennut 12 mittels eines umformenden Fertigungsverfahrens wie beispielsweise Pressen, Stanzen oder Rollen usw. in den Antriebswellenzylinder 13 der Antriebswelle 9 eingebracht.

In einem anderen Ausführungsbeispiel weist der Antriebswellenzylinder 13 der Antriebswelle 9 zwei, drei, vier, fünf, sechs, sieben oder mehr als sieben Schraubennuten 12 auf. Im dargestellten Ausführungsbeispiel hat die Schraubennut 12, insbesondere die zu zumindest eine Schraubennut 12, einen im Wesentlichen rechteckförmigen Querschnitt. In einem anderen Ausführungsbeispiel weist die Schraubennut 12 einen trapezförmigen und/oder quadratischen und/oder runden und/oder elliptischen und/oder dreieckigen und/oder vieleckigen Querschnitt oder einen Querschnitt mit einer Kombination der zuvor genannten Formen auf.

Im dargestellten Ausführungsbeispiel ist in das Schieberelement 7 zumindest ein Nuteingriffssegment 21, insbesondere ein Stift, eingebracht, der zumindest abschnittsweise in die Schraubennut 12 eingreift. Das Nuteingriffssegment 21 kann in einem anderen Ausführungsbeispiel zumindest abschnittweise als Platte oder dreidimensionale Platte ausgebildet sein, die zumindest abschnittsweise in die Schraubennut 12 eingreift. In einem anderen Ausführungsbeispiel sind in das Schieberelement 7 zwei, drei, vier, fünf, sechs oder mehr als sechs Nuteingriffssegmente 21, insbesondere Stifte, eingebracht, die zumindest abschnittsweise in die Schraubennut 12 eingreifen. In einem anderen Ausführungsbeispiel ist das zumindest eine Nuteingriffssegment 21 einteilig mit dem Schieberelement 7 ausgebildet.

Der Antriebswellenzylinder 13 kann sich translatorisch und/oder rotatorisch in der Schieberelementbohrung 8 bewegen.

Auf dem Schieberelementschaft 10 ist ein erstes Federelement 17 angeordnet. Das erste Federelement 17 ist im dargestellten Ausführungsbeispiel als Schraubenfeder ausgebildet. In einem anderen Ausführungsbeispiel ist das Federelement 17 als eine andere Feder ausgebildet. Das Federelement, insbesondere das erste Federelement 17, kann sich zumindest abschnittsweise an der Führungsscheibe 5 und/oder an dem Schieberelement 7, insbesondere an einem nicht bezeichneten Absatz des Schieberelements abstützen. Insbesondere im Notbetrieb, beispielsweise wenn die nicht dargestellte Antriebseinheit des Ventils 1 versagt, bewirkt das erste Federelement 17, dass die erste Gehäuseöffnung 19 und/oder die zweite Gehäuseöffnung 20 des Ventils 1 verschlossen wird. In einem anderen Ausführungsbeispiel bewirkt die Feder 17, dass die erste Gehäuseöffnung 19 und/oder die zweite Gehäuseöffnung 20 im Notbetrieb geöffnet bleibt. Auf der Antriebswelle 9 ist ein zweites Federelement 18, insbesondere eine Schraubenfeder, angeordnet, die sich nicht an dem nicht näher bezeichneten Absatz beim Übergang der Antriebswelle 9 in den Antriebswellenzylinder 13 und/oder an einer nicht näher bezeichneten zweiten Wand, insbesondere der nicht näher bezeichneten Antriebseinheit, zumindest abschnittsweise abstützen kann. Das zweite Federelement 18 dient ebenfalls dazu, dass insbesondere im Notbetrieb, beispielsweise beim Versagen der Antriebseinheit, der Kolben 14 aufgrund der Federkraft in eine derartige Position gebracht wird, dass zumindest die erste Gehäuseöffnung 19 und/oder die zweite Gehäuseöffnung 20 verschlossen wird bzw. in einem anderen Ausführungsbeispiel geöffnet bleibt.

Die Schraubennut 12 weist einen Steigungswinkel auf, der Werte zwischen 0,5° und 45°, insbesondere zwischen 1° und 30°, insbesondere zwischen 1° und 25°, insbesondere zwischen 1° und 20°, insbesondere zwischen 1° und 15°, insbesondere zwischen 1 ° und 12°, insbesondere zwischen 2° und 10°, insbesondere zwischen 2° und 8°, insbesondere zwischen 2,5° und 6° annimmt.

Durch eine nicht dargestellte Antriebseinheit, beispielsweise einen Elektromotor, wird die Antriebswelle 9 in Richtung AWD oder entgegen der Richtung AWD angetrieben, insbesondere gedreht. Im dargestellten Ausführungsbeispiel kann der Antriebswellenzylinder 13 dabei nur eine rotatorische Bewegung ausführen. Die translatorische Bewegung ist dabei nicht möglich. Durch Drehen der Antriebswelle 9 in Richtung AWD bewegt sich das Schieberelement 7 sowie der Schieberelementschaft 10 und der Kolben 14 in Richtung TKB oder entgegen dazu. Der Kolben 14 bzw. das Schieberelement 7 bzw. der Schieberelementschaft 10 führen dabei eine translatorische Bewegung durch, die rotatorische Bewegung ist nicht möglich. Die Drehbewegung in Richtung AWD bewirkt die translatorische Bewegung des Kolbens in einer Richtung TKB. Ein Drehen der Antriebswelle 9 entgegen der Richtung AWB bewirkt eine translatorische Bewegung des Kolbens 14 entgegen der Richtung PKB. Durch die translatorische Bewegung des Kolbens 14 wird die erste Gehäuseöffnung 19 und/oder die zweite Gehäuseöffnung 20 des zweiten Ventilgehäuseteils 4 vollständig geöffnet und/oder teilweise geöffnet oder vollständig geschlossen. Der Kolben 14 kann dabei zwischen zwei Endpositionen jede beliebige Zwischenposition einnehmen. Eine bestimmte Drehung der Antriebswelle 9 um einen bestimmten Drehwinkel bewirkt einen zugeordneten translatorischen Weg, den der Kolben 14 zurücklegt. Der Zusammenhang zwischen der rotatorischen Bewegung der Antriebswelle 9 und dem zurückgelegten translatorischen Weg des Kolbens 14 wird über den Steigungswinkel der Schraubennut 12 festgelegt.

Das Ventilgehäuse 2, das erste Ventilgehäuseteil 3, das zweite Ventilgehäuseteil 4 können aus einem Metall, wie beispielsweise aus Edelstahl oder aus Aluminium oder beispielsweise aus Keramik oder aus einem Faserverbundwerkstoff ausgebildet sein. Das Schieberelement 7 und/oder der Schieberelementschaft 10 und/oder die Antriebswelle 9 können aus einem Metall wie beispielsweise aus Edelstahl oder aus Aluminium oder aus einem wärmebeständigen Kunststoff oder aus einem Faserverbundwerkstoff oder aus Keramik, ausgebildet sein. Der Kolben 14 kann aus einem Metall, wie beispielsweise aus Edelstahl oder aus Aluminium oder aus einem wärmebeständigen Kunststoff oder aus Keramik und/oder aus einem Faserverbundwerkstoff, ausgebildet sein. Das erste Federelement 17 und/oder das zweite Federelement 18 sind beispielsweise aus einem Federstahl ausgebildet.

Figur 2 zeigt eine weitere Schnittdarstellung A-A einer Vorrichtung zur Steuerung eines Abgasstroms 1 mit einer Verdrehsicherung 31 des Schieberelements 7. Gleiche Merkmale sind mit den gleichen Bezugszeichen versehen wie in Figur 1.

Das Schieberelement 7 weist eine Schieberelementnut 30 auf. Die Schieberelementnut kann einen rechteckförmigen und/oder trapezförmigen und/oder runden und/oder elliptischen und/oder vieleckigen Querschnitt aufweisen. Das erste Ventilgehäuseteil 3 weist ein Verdrehsicherungselement 31 auf, das in die Schieberelementnut 30 eingreift und so die translatorische Bewegung des Schieberelements 7 ermöglicht aber eine rotatorische Bewegung des Schieberelements 7 verhindert. Das Verdrehsicherungselement ist als Nutstein oder als Stift ausgebildet. In einem anderen Ausführungsbeispiel ist das Verdrehsicherungselement 31 einteilig mit dem ersten Ventilgehäuseteil 3 ausgebildet. In einem anderen Ausführungsbeispiel ist das Verdrehsicherungselement 31 beispielsweise in eine Bohrung des ersten Ventilgehäuseteils 3 eingesteckt bzw. eingeschoben und/oder mit dem ersten Ventilgehäuseteil 3 stoffschlüssig und/oder formschlüssig und/oder reibschlüssig verbunden. In einem anderen Ausführungsbeispiel sind zwei, drei oder mehr als drei Verdrehversicherungselemente 31 in dem ersten Ventilgehäuseteil 3 angeordnet oder einteilig mit diesem ausgebildet. Das erste Ventilgehäuseteil 3 und/oder das zweite Ventilgehäuseteil 4 und/oder die Führungsscheibe 5 weisen zumindest eine, insbesondere eine, zwei, drei oder mehr als drei Gehäuseflanschbohrungen 32 auf. Mit der zumindest einen Gehäuseflanschbohrung 32, die im dargestellten Ausführungsbeispiel konzentrisch ausgebildet sind, werden das erste Ventilgehäuseteil 3 und/oder das zweite Ventilgehäuseteil 4 und/oder die Führungsscheibe 5 miteinander verbunden, beispielsweise verschraubt und/oder mit der nicht dargestellten Antriebseinheit verbunden bzw. an dieser befestigt.

Figur 3 zeigt eine Antriebswelle 9 mit einem zylinderförmig ausgebildeten Abschnitt 13, in den eine schraubenförmige Nut 12 eingebracht ist. Gleiche Merkmale sind mit den gleichen Bezugszeichen versehen wie in den vorherigen Figuren. In einem anderen Ausführungsbeispiel sind in den Antriebswellenzylinder 13 zwei, drei, vier, fünf oder mehr als fünf Schraubennuten 12 eingebracht.

Figur 4 zeigt eine Seitenansicht der Vorrichtung zur Steuerung eines Abgasstroms 1. Gleiche Merkmale sind mit den gleichen Bezugszeichen versehen wie in den vorherigen Figuren.

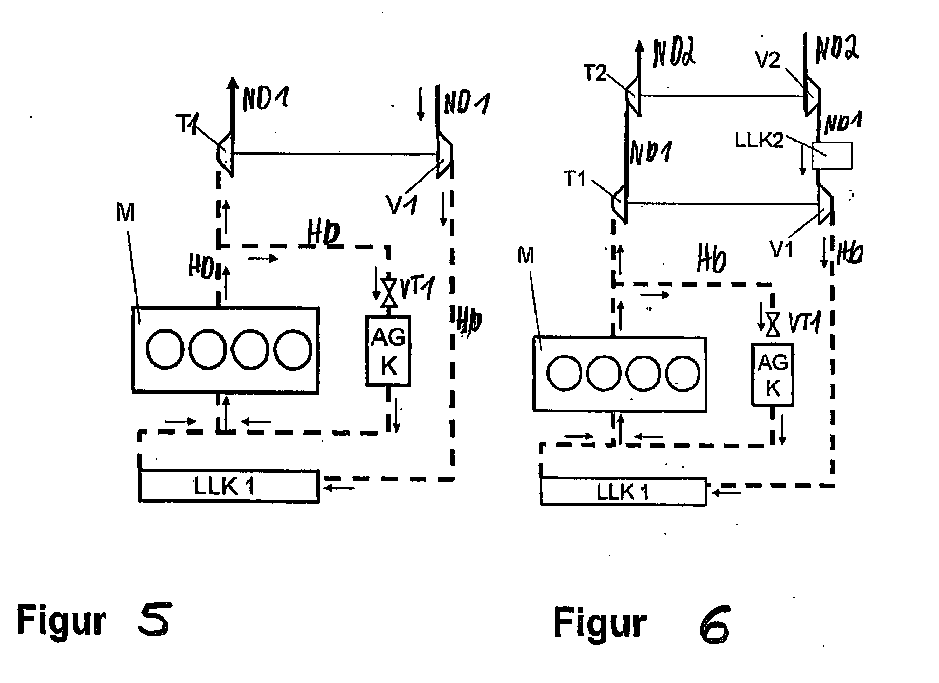

Figur 5 zeigt eine schematische Darstellung eines Systems mit einem Abgaswärmetauscher AGK und einem Ventil VP1 auf der Hochdruckseite mit einstufiger Aufladung.

Das in Figur 5 dargestellte System zeigt einen Verbrennungsmotor M, einen Wärmetauscher AGK, der insbesondere ein Abgaswärmetauscher ist. In einem anderen Ausführungsbeispiel kann der Wärmetauscher aber auch ein Kühlmittelkühler und/oder ein Ölkühler und/oder ein Kondensator und/oder Kondensator einer Klimaanlage und/oder ein Verdampfer einer Klimaanlage und/oder ein Ladeluftkühler und/oder ein Gaskühler für eine Klimaanlage sein. Ferner weist das System ein Ventil VT1 auf, das dem Ventil 1 entspricht. Von außen angesaugte Luft, die den Druck ND1, den Niederdruck, aufweist, wird über einen ersten Verdichter V1, der über eine erste Turbine angetrieben wird, auf den höheren Druck HD, den Hochdruck, verdichtet. Die Turbine T1 und der Verdichter V1 sind als Turbolader ausgebildet. Die auf den Hochdruck HD komprimierte Luft erwärmt sich und wird in dem Ladeluftkühler LLK1 abgekühlt. Der abgekühlten Ladeluft wird rückgeführtes und abgekühltes Abgas beigemischt und die Ladeluftabgasmischung gelangt in den Verbrennungsmotor M. Abgas verlässt den Verbrennungsmotor M und ein Teil des Abgases wird mit dem ersten Ventil VT1, dem Ventil 1, insbesondere dem AGR-Ventil und/oder dem Bypassventil, zugeführt und anschließend im Wärmetauscher AGK, insbesondere dem Abgaswärmetauscher, gekühlt und wieder der komprimierten und abgekühlten Ladeluft beigemischt. In Figur 5 erfolgt die Aufladung der Ladeluft einstufig über den Verdichter V1 bzw. über den Turbolader. In einem anderen Ausführungsbeispiel ist das Ventil VT1, insbesondere das Ventil 1 der Figuren 1 bis 4, nach dem Wärmetauscher AGK angeordnet.

Figur 6 zeigt eine schematische Darstellung eines Systems mit einem Abgaswärmetauscher AGK und einem Ventil VP1 auf der Hochdruckseite mit zweistufiger Aufladung. Gleiche Merkmale sind mit dem gleichen Bezugszeichen versehen wie in den vorherigen Figuren.

Luft wird vom Druckniveau ND2 von dem Niederdruckniveau auf das Niederdruckniveau ND1 von dem Verdichter V2 verdichtet. Die verdichtete Luft erwärmt sich dabei und wird in dem Ladeluftkühler LLK2 abgekühlt und von dem Verdichter V1 auf das Hochdruckniveau HB verdichtet. Der Verdichter V1 wird von der ersten Turbine T1 angetrieben, die einen Teil des Abgases von dem Hochdruckniveau HD auf das Niederdruckniveau ND1 entspannt. Ferner wird der Verdichter V2 von der zweiten Turbine T2 angetrieben, die einen Teil des Abgases von dem Niederdruckniveau ND1 auf das Niederdruckniveau ND2 entspannt. Sowohl in Figur 5 als auch in Figur 6 ist das Ventil VT1, insbesondere das Ventil 1, zuströmseitig des Wärmetauschers AGK, insbesondere des Abgaswärmetauschers angeordnet. In einem anderen Ausführungsbeispiel ist das Ventil 1, insbesondere das Ventil VT1, nach dem Wärmetauscher AGK angeordnet. Das Ventil VT1, insbesondere das Ventil 1 der Figuren 1 bis 4, kann sowohl als separate Baueinheit vor dem Abgaswärmetauscher AGK ausgebildet sein oder in einem anderen Ausführungsbeispiel einteilig mit dem Abgaswärmetauscher AGK ausgebildet sein bzw. in diesem integriert sein.

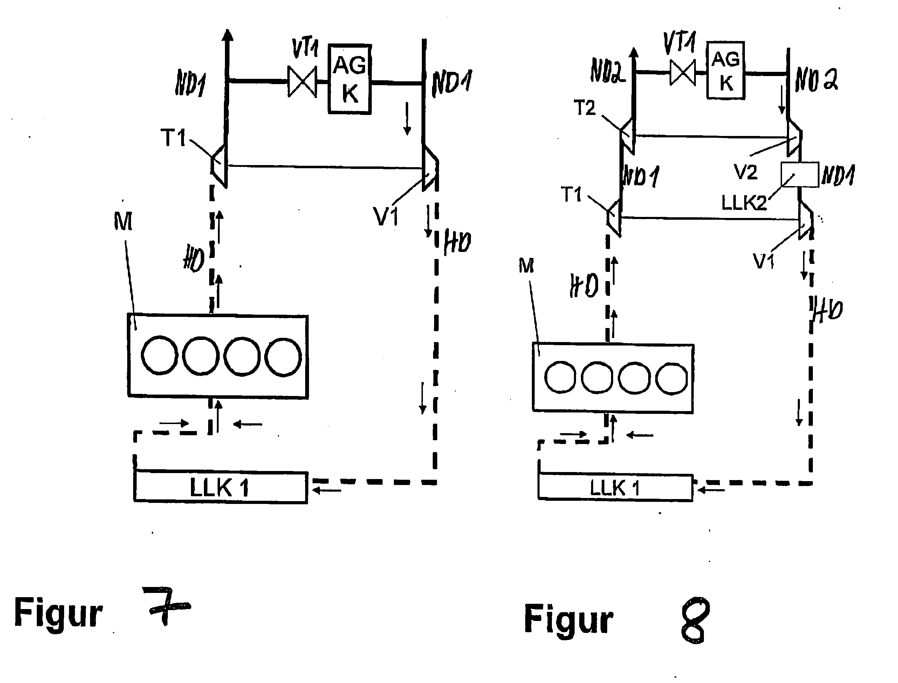

Figur 7 zeigt eine schematische Darstellung eines Systems mit einem Wärmetauscher AGK und einem Ventil VT1 auf der Niederdruckseite mit einstufiger Aufladung. Gleiche Merkmale sind mit den gleichen Bezugszeichen versehen wie in den vorherigen Figuren.

Im Unterschied zu Figur 5 sind das Ventil VT1, insbesondere das Ventil 1 der Figuren 1 bis 4, auf der Niederdruckseite, d. h. abströmseitig der ersten Turbine T1 angeordnet. Im dargestellten Ausführungsbeispiel ist das Ventil VT1, insbesondere das Ventil 1 der Figuren 1 bis 4, als separate Baueinheit zuströmseitig des Wärmetauschers AGK angeordnet. In einem anderen Ausführungsbeispiel ist das Ventil VT1 einteilig mit dem Wärmetauscher AGK, insbesondere mit dem Abgaswärmetauscher, ausgebildet und/oder in diesen integriert. In einem anderen Ausführungsbeispiel ist das Ventil VT1, insbesondere das Ventil 1 der Figuren 1 bis 4, abströmseitig des Wärmetauschers AGK angeordnet.

Figur 8 zeigt eine schematische Darstellung eines Systems mit einem Wärmetauscher AGK und einem Ventil VT1 auf der Niederdruckseite mit zweistufiger Aufladung. Gleiche Merkmale sind mit den gleichen Bezugszeichen versehen wie in den vorherigen Figuren.

Im Unterschied zu Figur 7 ist das Ventil VT1 und/oder der Wärmetauscher AGK, insbesondere der Abgaswärmetauscher im Niederdruckbereich ND2 angeordnet. Das Ventil VT1, insbesondere das Ventil 1 der Figuren 1 bis 4, ist abströmseitig der zweiten Turbine T2 angeordnet, ebenso wie der Abgaswärmetauscher AGK, wobei das Ventil VT1 als separate Baueinheit zuströmseitig des Wärmetauschers AGK angeordnet ist. In einem anderen Ausführungsbeispiel kann das Ventil VT1, insbesondere das Ventil 1 der Figuren 1 bis 4, einteilig mit dem Wärmetauscher AGK ausgebildet sein und/oder in diesen integriert sein. Angesaugte Luft wird mit dem gekühlten, rückgeführten Abgas vermischt und im zweiten Verdichter V2 auf das Niederdruckniveau ND1 komprimiert, anschließend in einem zweiten Ladeluftkühler LLK2 abgekühlt und in einem ersten Verdichter V1 auf das Hochdruckniveau HD komprimiert.

In einem anderen Ausführungsbeispiel ist das Ventil VT1, insbesondere das Ventil 1 der Figuren 1 bis 4, abströmseitig des Wärmetauschers AGK angeordnet.

Die Merkmale der verschiedenen Ausführungsbeispiele sind beliebig miteinander kombinierbar. Die Erfindung ist auch für andere als die gezeigten Gebiete einsetzbar.

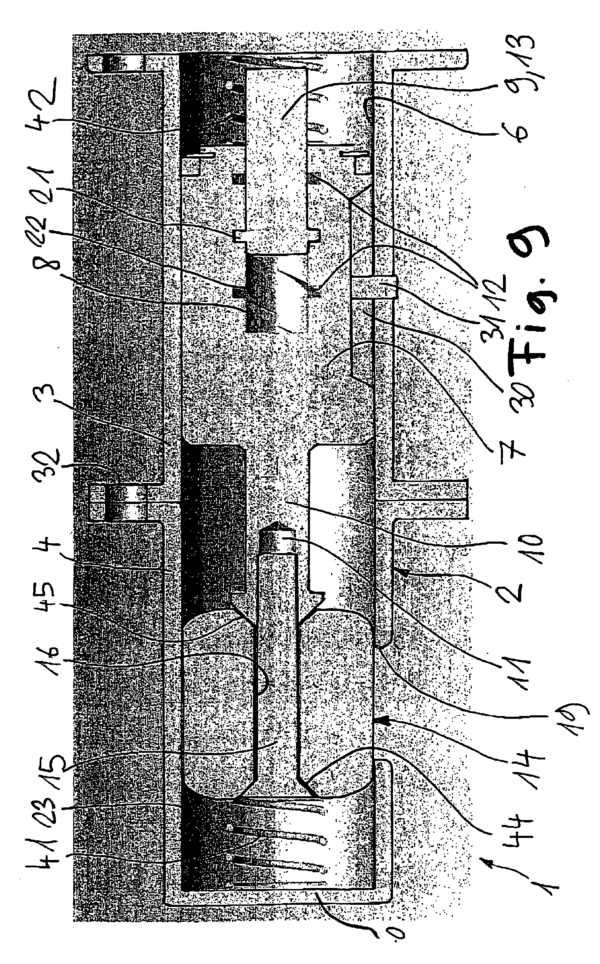

In Figur 9 ist eine ähnliche Vorrichtung 1 wie in den Figuren 1 und 2 im Längsschnitt dargestellt. Im Unterschied zu den vorangegangenen Ausführungsbeispielen ist bei dem in Figur 9 dargestellten Ausführungsbeispiel ein erstes Federelement 41 zwischen dem Kolben 14 und einer Gehäuseabschlusswand 40 eingespannt. Ein zweites Federelement 42 ist am anderen Ende des Gehäuses gegen das Schieberelement 7 vorgespannt. Durch die beiden Federelemente 41, 42 wird der Kolben 14 in seine Nulllage vorgespannt. Des Weiteren sieht man in Figur 9, dass die Schraube 15 einen Senkkopf mit einer Fase 44 aufweist. Die Fase 44 hat einen Winkel von etwa 45 Grad. Analog ist an dem freien Ende des Schieberelementschafts 10 eine Fase 45 ausgebildet. Die Fase 45 ist entgegengesetzt zu der Fase 44 gerichtet und weist ebenfalls einen Fasenwinkel von etwa 45 Grad auf. Durch die Fasen 44 und 45 werden zwei kegelstumpfartige Abschnitte geschaffen, die sich aufeinander zu verjüngen. Dadurch wird auf einfache Art und Weise ein Möglichkeit geschaffen, den Kolben 14 relativ zu dem Schieberelementschaft 10 und der Schraube 15 in dem Ventilgehäuse 2 zu zentrieren. Bei dem in Figur 9 dargestellten Ausführungsbeispiel entfällt die Führungsscheibe (5 in den Figuren 1 und 2).

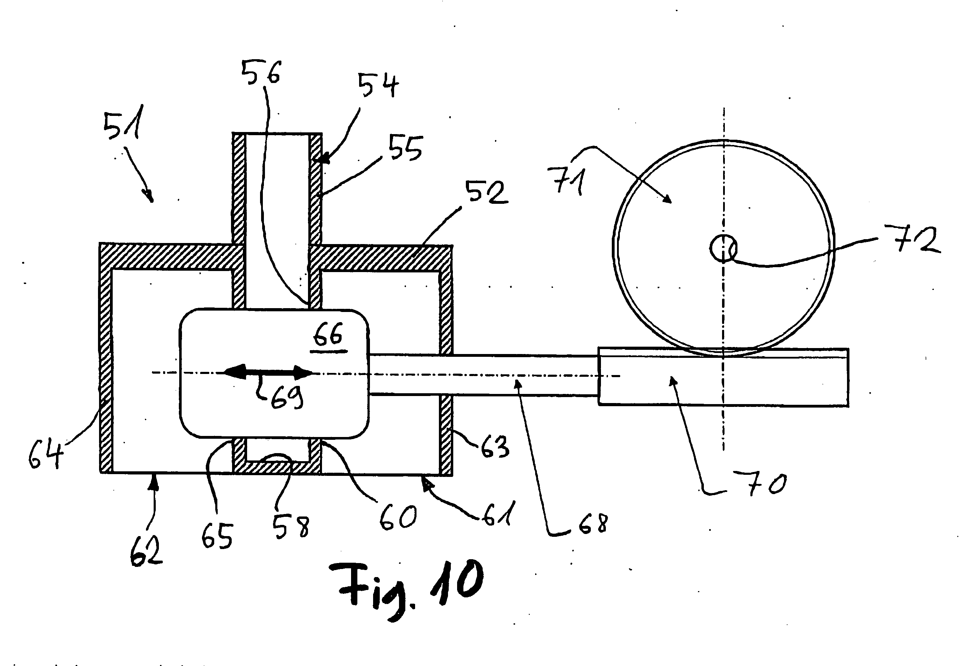

In Figur 10 ist eine Ventileinrichtung, insbesondere eine Wärmeübertragerventileinrichtung 51 gemäß einem weiteren Ausführungsbeispiel dargestellt. Die Wärmeübertragerventileinrichtung 51 umfasst ein Gehäuse 52 mit einem Eingang 54 für ein Fluid. Bei dem Fluid handelt es sich vorzugsweise um Abgas oder Ladeluft. Der Eingang 54 wird von einem Eingangsstutzen 55 gebildet, der im Wesentlichen die Gestalt eines Kreiszylindermantels aufweist, der einstückig mit dem Gehäuse 52, das auch als Ventilgehäuse bezeichnet wird, verbunden ist und eine kreisrunde Eintrittsöffnung 56 umfasst. Der Eintrittsöffnung 56 gegenüberliegend ist in dem Ventilgehäuse 52 eine Ausnehmung 58 ausgespart, deren Funktion später erläutert wird.

Des Weiteren weist das Ventilgehäuse 52 eine Kühleraustrittsöffnung 60 in einem Kühlerausgang 61 auf, der mit einem (nicht dargestellten) Kühler in Verbindung steht. Darüber hinaus weist das Ventilgehäuse 52 einen Bypassausgang 62 aus, der mit einer (nicht dargestellten) Bypassleitung in Verbindung steht, über die Fluid an dem Kühler vorbei geleitet wird. Der Kühlerausgangs 61 wird von einem Kühleraustrittsstutzen 63 gebildet, der einstückig mit dem Ventilgehäuse 52 verbunden ist. Der Bypassausgang 62 wird von einem Bypassaustrittsstutzen 64 gebildet, der ebenfalls einstückig mit dem Ventilgehäuse 52 verbunden ist und eine Bypassaustrittsöffnung 65 aufweist. Die jeweiligen Querschnitte der Leitungen sind gleich groß.

In dem Ventilgehäuse 52 ist ein Ventilschieber 66 hin und her bewegbar geführt. Der Ventilschieber 66, der auch als Ventilkolben oder Schließelement bezeichnet wird, ist an einem Ende einer Ventilschieberstange oder Schubstange oder Kolbenstange 68 befestigt. Das andere Ende der Schubstange 68 ist an einer Zahnstange 70 befestigt. Die Zahnstange 70 ist mit einer Verzahnung ausgestattet, die mit einer Außenverzahnung eines Zahnrads kämmt. Das Zahnrad 71 wird durch eine Antriebswelle 72 angetrieben. Durch die Zahnstange 70 wird eine Drehbewegung der Antriebswelle 72 und des Zahnrads 71 in eine translatorische Bewegung der Zahnstange 70 und der Schubstange 68 sowie des Schließelements 66 umgewandelt. Die Bewegung des Schließelements 66 ist durch einen Doppelpfeil 69 angedeutet.

Bei dem in Figur 10 dargestellten Ausführungsbeispiel wird auf einfache Art und Weise eine Drehbewegung des Zahnrads 71 in eine Hubbewegung des Kolbens 66 umgesetzt. Die Übersetzung der Bewegung erfolgt kraftgünstig, kostengünstig, mit geringen Reibkräften und ohne Selbsthemmung. Anstelle des Zahnrads kann auch ein Zahnradsegment verwendet werden, das auf der Welle eines Antriebs, insbesondere eines Drehantriebs, angeordnet ist.

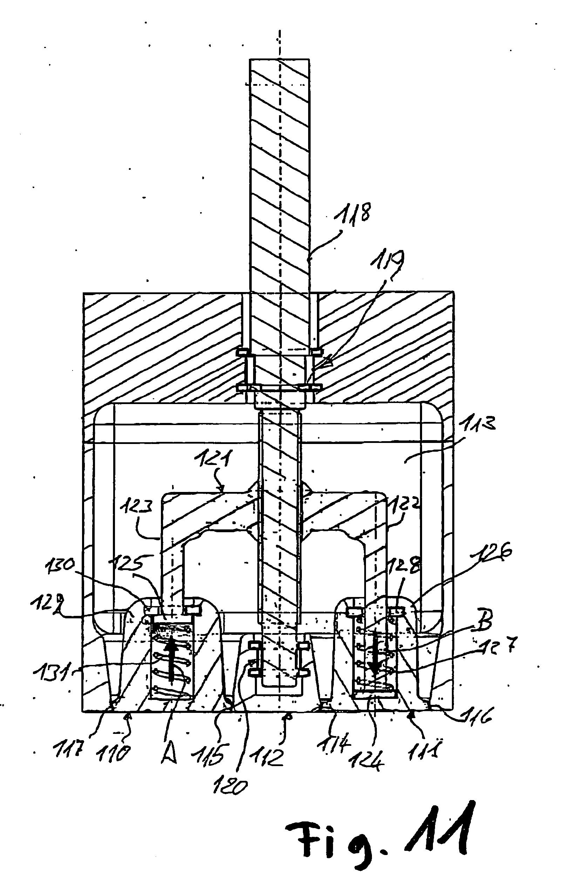

Figur 11 zeigt einen axialen Schnitt durch ein alternatives Doppelventil.

In ähnlicher Weise wie bei der Bauart nach der EP 0 994 247 B1 sind zwischen einer Abgasleitung eines Verbrennungsmotors und einer Zuluftleitung zu dem Verbrennungsmotor zwei Strömungswege vorgesehen, über die Abgas von der Abgasleitung zu der Zuluftleitung zurückgeführt werden kann. Einer der Strömungswege enthält einen Abgaskühler, während der andere das Abgas direkt und ungekühlt zu der Zuluftleitung führt. Das in der Zeichnung dargestellte Doppelventil hat die Funktion, entweder beide Strömungswege abzusperren oder - entsprechend den Betriebsbedingungen - einen der beiden Strömungswege freizugeben, um entweder gekühltes Abgas oder ungekühltes Abgas der Zuluft zu dem Verbrennungsmotor zuzugeben. Jedes der Ventilelemente 110, 111 des Doppelventils soll dabei zwischen seiner Schließstellung und seiner voll geöffneten Stellung verstellbar sein, ohne dass das jeweils andere Ventilelement aus seiner Schließstellung herausbewegt wird.

Das Ventilelement 110 ist beispielsweise in einem Strömungsweg angeordnet, der einen Abgaskühler enthält. Das Ventilelement 111 ist dann in einem Strömungsweg angeordnet, der ungekühltes Abgas von der Abgasleitung zu einer Zuluftleitung führt. Die entsprechenden Strömungswege sind in nicht näher dargestellter Weise an ein Ventilgehäuse 112 angeschlossen. Die Ventilelemente 110, 111 geben in ihrer geöffneten Stellung jeweils den Strömungsweg zu einer Kammer 113 des Ventilgehäuses 112 frei, die in nicht näher dargestellter Weise mit einer Austrittsöffnung versehen ist, die zur Zuluftleitung für einen Brennkraftmotor führt.

Das Ventilelement 110, das in seiner Schließstellung dargestellt ist, öffnet in Richtung des Pfeiles A, der in das Innere der Kammer 113 gerichtet ist. Das Ventilelement 111 öffnet in Richtung des Pfeiles B, der aus der Kammer 113 hinaus gerichtet ist. Beide Ventilelemente 110, 111 sind als Tellerventilelemente ausgebildet. Sie besitzen eine ringförmige, kegelstumpfförmige Dichtfläche 114, 115, der jeweils-ein entsprechend kegelstumpfförmiger Ventilsitz 116, 117 zugeordnet ist.

Die beiden Ventilelemente 110, 111 werden mittels eines gemeinsamen Antriebs aus der dargestellten Schließstellung in ihre jeweilige Öffnungsstellung gebracht. Der gemeinsame Antrieb enthält eine Gewindestange 118, die nur in dem Bereich der Kammer 113 mit einem Außengewinde versehen ist und die in dem Gehäuse 112 mittels Wälzlagern 119, 120 gelagert und mittels Dichtungselementen abgedichtet ist. Auf der Gewindestange 118 ist ein mit einem Gewinde versehenes Mitnehmerelement 121 angeordnet. Dieses Mitnehmerelement 121 hat zwei zu der Gewindestange 118 parallel verlaufende Mitnehmerstangen 122, 123. Diese Mitnehmerstangen 122, 123 sind an ihren Enden mit Mitnehmeranschlägen 124, 125 versehen.

Das Ventilelement 111 besitzt einen in die Kammer 113 hineinragenden Ansatz 126, der mit einer Bohrung versehen ist, in welches die Mitnehmerstange 122 eindringt. Der Mitnehmeranschlag 124 der Mitnehmerstange 122 liegt in der dargestellten Schließstellung an dem Boden der Bohrung an. Auf dem Mitnehmeranschlag 124 stützt sich eine Druckfeder 127 ab, deren anderes Ende gegen einen in die Bohrung des Ansatzes 126 eingesetzten Abstützring 128 abgestützt ist.

Das Ventilelement 110 ist ebenfalls mit einem nach innen in die Kammer 113 des Gehäuses ragenden Ansatz 129 versehen. Der Ansatz 129 weist eine Bohrung auf, in die die Mitnehmerstange 123 mit ihrem Mitnehmeranschlag 125 hinein ragt. Der Mitnehmeranschlag 125 liegt einem als Gegenanschlag dienenden Abstützring 130 gegenüber, der in die Bohrung eingesetzt ist. Zwischen dem Mitnehmeranschlag 125 und dem Boden der Bohrung ist eine Druckfeder 131 angeordnet, die gegen eine Abgasströmung das Ventilelement in Schließrichtung belastet.

Wenn die Gewindestange 118 mittels eines nicht dargestellten Drehantriebs verdreht wird, beispielsweise mittels eines Servomotors oder eines Schrittmotors, so wird das Mitnehmerelement 121 entsprechend der Drehrichtung in axialer Richtung zu der Gewindestange 118 verschoben. Erfolgt das axiale Verschieben des Mitnehmerelementes 121 in Richtung des Pfeiles A, so nimmt der Mitnehmeranschlag 125 der Mitnehmerstange 123 das Ventilelement 110 mit und öffnet den Strömungsweg, der mit dem Abgaskühler versehen ist. Das Ventilelement 111 liegt mit seiner Ventilfläche 114 an dem Ventilsitz 116 an und bleibt deshalb in der Schließstellung. Der Mitnehmeranschlag 124 drückt bei dieser Bewegung die Druckfeder 127 zusammen, so dass der Schließdruck des Ventilelementes 111 erhöht wird.

Wird die Gewindestangen 118 dann in Gegenrichtung gedreht, so bewegt sich das Mitnehmerelement 121 entsprechend in entgegengesetzter Richtung. Die Mitnehmerstange 123 nimmt über den Mitnehmeranschlag 125 und die Druckfeder 131 das Ventilelement 110 mit, bis dies seine dargestellte Schließstellung erreicht. Bei einer weiteren Bewegung des Mitnehmerelementes 121 in dieser Richtung wird die Druckfeder 131 zusammengedrückt, so dass der Schließdruck zwischen der Ventilfläche 115 und dem Ventilsitz 117 erhöht wird. Sobald der Mitnehmeranschlag 124 den Boden der Bohrung des Ansatzes 126 des Ventilelementes 111 erreicht hat, wird bei einer weiteren Bewegung in gleicher Richtung das Ventilelement 111 mitgenommen, so dass seine Ventilfläche 114 sich von dem Ventilsitz 116 löst.

Das Ventilelement 110 ist in der Schließstellung durch den Druck des Abgases belastet. Die Druckfeder 131 ist deshalb so zu bemessen, dass sie das Ventilelement in der dargestellten Stellung gegen den Abgasdruck sicher geschlossen hält. Wenn das Ventilelement 111 zum Öffnen des anderen Strömungsweges bewegt wird, so wird die Druckfeder 131 weiter gespannt, so dass sie dann sicher das Ventilelement 110 gegen den Abgasdruck geschlossen hält.

Die Erfindung bietet den Vorteil, dass die von den Ventilelementen 110 und 111 gesteuerten Ventile genau, unabhängig voneinander stufenlos mit nur einem Aktuator angesteuert werden können. Außerdem ist nach außen nur eine Wellendichtung notwendig, während die Verbindung zu den Ventilelementen 110, 111 keine Dichtung erfordert. Darüber hinaus ist das Ventil in der Nulllage sicher geschlossen, da beide Ventilelemente mittels Federkraft in die Schließ-Stellung gedrückt werden.

Bei einer abgewandelten Ausführungsform werden Ventilelemente in Form von Kolbenschiebern vorgesehen.
Bei einer weiteren abgewandelten Ausführungsform ist die Gewindestange 118 außerhalb der Kammer 113 angeordnet. In diesem Fall befindet sich auch der Teil des Mitnehmerelementes, der mit dem Innengewinde versehen ist, außerhalb der Kammer 113. In die Kammer 113 dringen dann nur die Mitnehmerstangen 122, 123 ein, die mit Dichtungselementen versehen sind.

Bei dem in Figur 11 dargestellten Beispiel wird eine Drehbewegung eines Antriebs in eine Hubbewegung umgesetzt, die alternierend die beiden Ventilteller antreibt. Der erste Teller wird angehoben, während der zweite Teller in seiner Position bleibt. Analog wird der zweite Teller abgesenkt, ohne den ersten Teller zu bewegen. Die Übersetzung der Bewegung erfolgt kraftgünstig, kostengünstig, mit geringen Reibkräften und ohne Selbsthemmung. Durch die zentral gelegene Gewindestange wird je nach Drehrichtung eines der Ventile geöffnet. Eine der Mitnehmerstangen ist jeweils auf Anschlag, während die andere Mitnehmerstange gegen die zugehörige Feder mit dem Ventilteller verbunden ist. Am anderen Ventilteller besteht dieselbe Verbindung, jedoch umgekehrt. Die Ventilteller öffnen entgegengesetzt zueinander. Wird also an der Gewindestange gedreht, so drückt die Mitnehmerstange gegen den ersten Ventilteller und öffnet diesen. Beim zweiten Ventilteller drückt die Mitnehmerstange auf die Feder und diese auf den Ventilteller. Da die Ventilteller entgegengesetzt angeordnet sind, bleibt das zweite Ventil geschlossen und wird, mit zunehmendem Öffnungsgrad des ersten Ventils fester in seinen Sitz gepresst. In Nulllage sind beide Ventile geschlossen.

Durch die verschiedenen erfindungsgemäßen Lösungen wird ein genaues, unabhängiges, stufenloses Ansteuern der Ventile mit einem Aktuator ermöglicht. Ein ansonsten notwendiges Hauptlager kann entfallen. Es wird nur eine Wellendichtung nach außen benötigt. Es müssen keine Federn im Abgasstrom angeordnet werden. Außerdem wird nur ein geringer Bauraum benötigt. Der vorzugsweise elektrische Antrieb dient gleichzeitig zur Abdichtung gegen die Umgebung.

## Patentansprüche

1. Abgasrückführventileinrichtung zum Steuern oder Regeln eines Fluidstroms, insbesondere eines Abgasstroms, mit einem Ventilgehäuse (2;52), das einen Eingang (14;19) für den Fluidstrom, einen Wärmeübertragerausgang (61) und einen Bypassausgang (62) aufweist, und mit genau einem Schließelement (14;66), das mit Hilfe einer Antriebseinrichtung, die mindestens ein Antriebselement umfasst, in dem Ventilgehäuse hin und her bewegbar ist, wobei das Antriebselement (9;71) so mit dem Schließelement (14;66) gekoppelt ist, dass eine Drehbewegung des Antriebselements in eine translatorische Bewegung des Schließelements umgesetzt wird, wobei der Öffnungsquerschnitt des Bypassausgangs (62) durch das Schließelement (14;66) stufenlos variierbar ist, während der Wärmeübertragerausgang (61) durch das Schließelement (14;66) verschlossen ist und der Öffnungsquerschnitt des Wärmeübertragerausgangs (61) durch das Schließelement (14;66) stufenlos variierbar ist, während der Bypassausgang (62) durch das Schließelement (14;66) verschlossen ist, **dadurch gekennzeichnet, dass** das Schließelement (14;66) durch mindestens eine Federeinrichtung (17,18;41,42) in eine Nulllage vorgespannt ist, in der sowohl der Wärmeübertragerausgang (61) als auch der Bypassausgang (62) durch das Schließelement (14;66) verschlossen sind.

2. Vorrichtung nach Anspruch 1, **dadurch gekennzeichnet, dass** das Schließelement (14;66) zwischen einer Schließstellung, in der sowohl der Wärmeübertragerausgang (61) als auch der Bypassausgang (62) durch das Schließelement (14;66) verschlossen sind, und einer By-passöffnungsstellung, in welcher der Bypassausgang (62) offen und der Wärmeübertragerausgang (61) durch das Schließelement (14;66) verschlossen ist, und einer Wärmeübertrageröffnungsstellung, in welcher der Wärmeübertragerausgang (61) offen und der Bypassausgang (62) durch das Schließelement (14;66) verschlossen ist, translatorisch bewegbar ist.

3. Vorrichtung nach einem der vorhergehenden Ansprüche, **dadurch gekennzeichnet, dass** die Antriebseinrichtung ein Antriebsformschlusselement (71), insbesondere ein Antriebszahnrad oder ein Antriebszahnradsegment, umfasst, das drehbar angetrieben ist.

4. Vorrichtung nach Anspruch 3, **dadurch gekennzeichnet, dass** das Antriebsformschlusselement (71) drehfest mit einer Antriebswelle (72) verbunden ist.

5. Vorrichtung nach Anspruch 3 oder 4, **dadurch gekennzeichnet, dass** sich das Antriebsformschlusselement (71) mit einem Kopplungsformschlusselement (70), insbesondere einem Kopplungszahnstangenelement, in Eingriff befindet, das translatorisch bewegbar und mit dem Schließelement (66) gekoppelt ist.

6. Vorrichtung nach einem der Ansprüche 1 oder 2, **dadurch gekennzeichnet, dass** die Antriebseinrichtung ein Kopplungsschieberelement (7) umfasst, das translatorisch bewegbar und mit dem Schließelement (14) gekoppelt ist.

7. Vorrichtung nach Anspruch 6, **dadurch gekennzeichnet, dass** das Kopplungsschieberelement (7) kraft- oder formschlüssig mit einer Antriebswelle (9) gekoppelt ist.

8. Vorrichtung nach Anspruch 7, **dadurch gekennzeichnet, dass** das Kopplungsschieberelement (7) ein Gewinde umfasst, in das mindestens ein Eingriffselement (21) eingreift, das an der Antriebswelle (9) befestigt ist.

9. Vorrichtung nach einem der Ansprüche 6 bis 8, **dadurch gekennzeichnet, dass** das Kopplungsschieberelement (7) durch ein Verdrehsicherungselement (31) so mit dem Ventilgehäuse (2) gekoppelt ist, dass sich das Kopplungsschieberelement (7) nicht in dem Ventilgehäuse (2) verdrehen kann.

10. Vorrichtung zur Steuerung eines Abgasstroms
aufweisend
zumindest ein Verschlusselement oder Schließelement (14) zum Verschließen zumindest eines Strömungskanals für Abgas, wobei das zumindest eine Verschlusselement (14) an zumindest einem translatorisch bewegbaren Kopplungsschieberelement oder Schieberelement (7) zur Bewegung des Verschlusselements (14) zwischen zumindest zwei Positionen angeordnet ist, nach einem der vorhergehenden Ansprüche, **dadurch gekennzeichnet, dass** das Schieberelement (7) zumindest ein Nuteingriffssegment (21) aufweist, welches zumindest bereichsweise in zumindest eine schraubenförmige Nut (12) einer drehbaren Antriebswelle (9) eingreifend ausgebildet ist.

11. Vorrichtung nach Anspruch 10, **dadurch gekennzeichnet, dass** die Antriebswelle (9) zumindest einen zylindrisch geformten Abschnitt (13) aufweist, in den die schraubenförmige Nut (12) eingebracht ist.

12. Vorrichtung nach einem der vorhergehenden Ansprüche, **dadurch gekennzeichnet, dass** das Schieberelement (7) zumindest eine Bohrung (8) aufweist, in die der zylindrisch geformte Abschnitt (13) der Antriebswelle (9) zumindest abschnittsweise eingreift.

13. Vorrichtung nach einem der vorhergehenden Ansprüche, **dadurch gekennzeichnet, dass** das Schieberelement (7) zumindest eine Schieberelementbohrung aufweist, in die zumindest ein Nuteingriffssegment (21) eingebracht ist.

14. Vorrichtung nach einem der vorhergehenden Ansprüche, **dadurch gekennzeichnet, dass** das Nuteingriffssegment (21) stiftartig ausgebildet ist.

15. Vorrichtung nach einem der vorhergehenden Ansprüche, **dadurch gekennzeichnet, dass** das Schieberelement (7) drehfest angeordnet ist.

16. Vorrichtung nach einem der vorhergehenden Ansprüche, **dadurch gekennzeichnet, dass** das Schieberelement (7) zumindest eine Schieberelementnut (30) zur Aufnahme eines Verdrehsicherungselements (31) aufweist.

17. Vorrichtung nach einem der vorhergehenden Ansprüche, **dadurch gekennzeichnet, dass** zumindest ein Verdrehsicherungselement (31) verdrehsicherungsstiftartig ausgebildet ist.

18. Vorrichtung nach einem der vorhergehenden Ansprüche, **dadurch gekennzeichnet, dass** zumindest ein Verschlusselement (14) kolbenartig ausgebildet ist.

19. Vorrichtung nach einem der vorhergehenden Ansprüche, **dadurch gekennzeichnet, dass** zumindest eine Feder (17, 18) auf dem Schieberelement (10) angeordnet ist, welche derart ausgebildet und eingerichtet ist, dass sie das Verschlusselement (14) bei Notbetrieb zu bewegen vermag.

20. Vorrichtung nach einem der vorhergehenden Ansprüche, **dadurch gekennzeichnet, dass** die Vorrichtung (1) als Ventil (1) mit zumindest einem Ventil (1, VT1) mit zumindest einem Ventilgehäuse ausgebildet ist.

21. Wärmetauscher (AGK) zur Abgaskühlung mit zumindest einer Vorrichtung (1, VT1) nach einem der Ansprüche 1 bis 20.

22. System mit zumindest einer Vorrichtung (1, VP1) nach einem der Ansprüche 1 bis 20 und/oder mit zumindest einem Wärmetauscher (AGK) nach Anspruch 21 aufweisend zumindest einen Verbrennungsmotor (M) für ein Fahrzeug, zumindest eine erste Turbine (T1) eines Abgasturboladers, wobei die Vorrichtung (1, VP1) zur Steuerung des Abgasstroms zuströmseitig oder abströmseitig des Wärmetauschers (AGK) auf der Hochdruckseite der ersten Turbine (T1) angeordnet ist.

23. System mit zumindest einer Vorrichtung (1, VP1) nach einem der Ansprüche 1 bis 20 und/oder mit zumindest einem Wärmetauscher (AGK) nach Anspruch 21 aufweisend zumindest einen Verbrennungsmotor (M) für ein Fahrzeug zumindest eine erste Turbine (T1) eines Abgasturboladers, wobei die Vorrichtung (1, VP1) zur Steuerung des Abgasstroms zuströmseitig oder abströmseitig des Wärmetauschers (AGK) auf der Niederdruckseite der ersten Turbine (T1) angeordnet ist.

## Claims

1. An exhaust gas recirculation valve device for controlling a fluid flow, in particular an exhaust gas flow, comprising a valve housing (2; 52), which has an inlet (14; 19) for the fluid flow, a heat exchanger outlet (61) and a bypass outlet (62), and further comprising exactly one closure element (14; 66), which can be moved back and forth in the valve housing by way of a drive device that comprises at least one drive element, wherein the drive element (9; 71) is coupled to the closure element (14; 66) so that a rotational movement of the drive element is converted into a translatory movement of the closure element, wherein the opening cross-section of the bypass outlet (62) can be continuously varied by the closure element (14; 66), while the heat exchanger outlet (61) is closed by the closure element (14; 66), and the opening cross-section of the heat exchanger outlet (61) can be continuously varied by the closure element (14; 66), while the bypass outlet (62) is closed by the closure element (14; 66), **characterized in that** the closure element (14; 66) is preloaded by at least one spring device (17, 18; 41, 42) into a zero position, in which both the heat exchanger outlet (61) and the bypass outlet (62) are closed by the closure element (14; 66).

2. The device according to claim 1, **characterized in that** the closure element (14; 66) can be moved in a translatory manner between a closed position, in which both the heat exchanger outlet (61) and the bypass outlet (62) are closed by the closure element (14; 66), and a bypass open position, in which the bypass outlet (62) is open and the heat exchanger outlet (61) is closed by the closure element (14; 66), and a heat exchanger open position, in which the heat exchanger outlet (61) is open and the bypass outlet (62) is closed by the closure element (14; 66).

3. A device according to any one of the preceding claims, **characterized in that** the drive device comprises a drive form-fit element (71), in particular a toothed driving wheel or a toothed driving wheel segment, which is rotatably driven.

4. The device according to claim 3, **characterized in that** the drive form-fit element (71) is non-rotatably connected to a drive shaft (72).

5. The device according to claim 3 or 4, **characterized in that** the drive form-fit element (71) is engaged with a coupling form-fit element (70), in particular a coupling toothed rack element, which can be moved in a translatory manner and is coupled to the closure element (66).

6. The device according to either claim 1 or 2, **characterized in that** the drive device comprises a coupling slide element (7), which can be moved in a translatory manner and is coupled to the closure element (14).

7. The device according to claim 6, **characterized in that** the coupling slide element (7) is non-positively or positively coupled to a drive shaft (9).

8. The device according to claim 7, **characterized in that** the coupling slide element (7) comprises a thread, in which at least one engagement element (21) engages, which is attached to the drive shaft (9).

9. A device according to any one of claims 6 to 8, **characterized in that** the coupling slide element (7) is coupled to the valve housing (2) by way of an anti-turn element (31) so that the coupling slide element (7) cannot rotate in the valve housing (2).

10. A device for controlling an exhaust gas flow, comprising at least one closing element or closure element (14) for closing at least one flow duct for exhaust gas, wherein the at least one closing element (14) is arranged on at least one translatorily movable coupling slide element or slide element (7) so as to move the closing element (14) between at least two positions, according to any one of the preceding claims, **characterized in that** the slide element (7) comprises at least one grove engagement segment (21), which is designed at least in some regions so as to engage in at least one helical grove (12) of a rotatable drive shaft (9).

11. The device according to claim 10, **characterized in that** the drive shaft (9) comprises at least one cylindrical section (13), in which the helical groove (12) is introduced.

12. A device according to any one of the preceding claims, **characterized in that** the slide element (7) comprises at least one borehole (8), in which the cylindrical section (13) of the drive shaft (9) engages at least in some sections.

13. A device according to anyone of the preceding claims, **characterized in that** the slide element (7) comprises at least one slide element borehole, in which at least one groove engagement segment (21) is introduced.

14. A device according to anyone of the preceding claims, **characterized in that** the groove engagement section (21) is designed in the manner of a pin.

15. A device according to anyone of the preceding claims, **characterized in that** the slide element (7) is arranged non-rotatably.

16. A device according to anyone of the preceding claims, **characterized in that** the slide element (7) comprises at least one slide element groove (30) so as to receive an anti-turn element (31).

17. A device according to anyone of the preceding claims, **characterized in that** at least one anti-turn element (31) is designed in the manner of an anti-turn pin.

18. A device according to anyone of the preceding claims, **characterized in that** at least one closing element (14) is designed in the manner of a piston.

19. A device according to anyone of the preceding claims, **characterized in that** at least one spring (17, 18) is arranged on the slide element (10), the spring being designed and equipped so as to be able to move the closing element (14) during emergency operation.

20. A device according to anyone of the preceding claims, **characterized in that** the device (1) is designed as a valve (1) having at least one valve (1, VT1) with at least one valve housing.

21. A heat exchanger (AGK) for exhaust gas cooling, comprising at least one device (1, VT1) according to any one of claims 1 to 20.

22. A system, comprising at least one device (1, VP1) according to any one of claims 1 to 20 and/or comprising at least one heat exchanger (ACK) according to claim 21, comprising at least one internal combustion engine (M) for a vehicle, at least one first turbine (T1) of an exhaust gas turbocharger, wherein the device (1, VP1) for controlling the exhaust gas flow on the inflow side or outflow side of the heat exchanger (AGK) is arranged on the high-pressure side of the first turbine (T1).

23. A system, comprising at least one device (1, VP1) according to any one of claim 1 to 20 and/or comprising at least one heat exchanger (AGK) according to claim 21, comprising at least one internal combustion engine (M) for a vehicle, at least one first Turbine (T1) of an exhaust gas turbocharger, wherein the device (1, VP1) for controlling the exhaust gas flow on the inflow side or outflow side of the heat exchanger (AGK) is arranged of the low-pressure side of the first turbine (T1).

## Revendications

1. Dispositif électrovanne de recyclage des gaz d'échapprment servant à commander ou à réguler un flux de fluide, en particulier un flux de gaz d'échappement, ledit dispositif comprenant un boîtier d'électrovanne (2; 52) qui présente une entrée (14; 19) pour le flux de fluide, une sortie d'échangeur de chaleur (61) et une sortie de dérivation (62), et comprenant précisément un élément de fermeture (14; 66) qui, à l'aide d'un dispositif d'entraînement qui comporte au moins un élément d'entraînement, est mobile suivant des mouvements de va-et-vient dans le boîtier de l'électrovanne, où l'élément d'entraînement (9; 71) est couplé à l'élément de fermeture (14; 66) de manière telle, qu'un mouvement rotatif de l'élément d'entraînement soit transformé en un mouvement de translation de l'élément de fermeture, où la section d'ouverture de la sortie (62) de la dérivation est modulable en continu par l'élément de fermeture (14; 66), tandis que la sortie (61) de l'échangeur de chaleur est fermée par l'élément de fermeture (14; 66), et la section d'ouverture de la sortie (61) de l'échangeur de chaleur est moulable en contenu par l'élément de fermeture (14; 66), tandis que la sortie (62) de la dérivation est fermée par l'élément de fermeture (14; 66), **caractérisé en ce que** l'élément de fermeture (14; 66) est précontraint par au moins un Dispositif à ressort (17, 18; 41, 42), en une position zéro dans laquelle aussi bien la sortie (61) de l'échangeur de chaleur que la sortie (62) de la dérivation sont fermées par l'élément de fermeture (14; 66).

2. Dispositif selon la revendication 1, **caractérisé en ce que** l'élément de fermeture (14; 66) est mobile en translation, entre une position de fermeture dans laquelle aussi bien la sortie (61) de l'échangeur de chaleur que la sortie (62) de la dérivation sont fermées par l'élément de fermeture (14; 66), et une position d'ouverture de la dérivation dans laquelle la sortie (62) de la dérivation est ouverte et la sortie (61) de l'échangeur de chaleur fermée par l'élément de fermeture (14; 66), et une position d'ouverture de l'échangeur de chaleur dans laquelle la sortie (61) de l'échangeur de chaleur est ouverte et la sortie (62) de la dérivation fermée par l'élément de fermeture (14; 66).

3. Dispositif selon lune ou l'autre des revendications précédentes, **caractérisé en ce que** le dispositif d'entraînement comprend un élément à complémentarité de forme d'entraînement (71), en particulier une roue denrée matrice ou un segment de roue dentée motrice qui est entraîné(e) en rotation.

4. Dispositif selon la revendication 3, **caractérisé en ce que** l'élément à complémentarité de forme d'entraînement (71) est combiné, solidaire en rotation, à un arbre d'entraînement (72).

5. Dispositif selon la revendication 3 ou 4, **caractérisé en ce que** l'élément à complémentarité de forme d'entraînement (71) est en prise avec un élément à complémentarité de forme de couplage (70), en particulier avec un élément de crémaillère de couplage, qui est mobile en translation et couplé à l'élément de fermeture (66).

6. Dispositif selon l'une des revendications 1 ou 2, **caractérisé en ce que** le dispositif d'entraînenent comporte un élément à tiroir de coupage (7) qui est mobile en translation et couplé à l'élément de fermeture (14).

7. Dispositif selon la revendication 6, **caractérisé en ce que** l'élément à tiroir de couplage (7) est couplé à un arbre d'entraînement (9), par action de force ou par complémentarité de forme.

8. Dispositif selon la revendication 7, **caractérisé en ce que** l'élément à tiroir de coulage (7) comprend un filetage dans lequel s'engage au moins un élément de contant (21) qui est fixé sur l'arbre d'entraînement (9).

9. Dispositif selon l'une quelconque des revendications 6 à 8, **caractérisé en ce que** l'élément à tiroir de coulage (7) est couplé au boîtier (2) de l'électrovanne, par un élément antitorsion (31), de marnière telle que l'élément à tiroir de coupage (7) ne puisse pas être en torsion dans le boîtier (2) de l'électrovanne.

10. Dispositif pour la commande d'un flux de gaz d'échappement selon l'une quelconque des revendications précédentes, présentant au moins un élément d'obturation ou un élément de fermeture (14) servant à la fermeture d'au moins un conduit d'écoulement pour des gaz d'échappement, où l'élément d'obturation (14) au moins au nombre de un est disposé sur au moins un élément à tiroir de couplage, ou sur un élément à tiroir (7), mobile en translation et servant au mouvement de l'élément d'obturation (14) entre au moins deux positions, **caractérisé en ce que** l'élément à tiroir (7) présente au moins un segment (21) d'engagement dans une rainure, segment qui est configuré en s'engageant au moins partiellement dans au moins une rainure (12), de forme hélicoïdale, d'un arbre d'entraînement (9) rotatif.

11. Dispositif selon la revendication 10, **caractérisé en ce que** l'arbre d'entraînement (9) présente au moins une partie (13) formée de façon cylindrique, partie dans laquelle est introduit la rainure (12) de forme hélicoïdal.

12. Dispositif selon l'une quelconque des revendications précédentes, **caractérisé en ce que** l'élément à tiroir (7) présente au moins un perçage (8) dans lequel s'engage, au moins partiellement, la partie (13) de l'arbre d'entraînement (9), formée de façon cylindrique.

13. Dispositif selon l'une quelconque des revendications précédentes, **caractérisé en ce que** l'élément à tiroir (7) présente au moins un perçage de l'élément à tiroir dans lequel est introduit au moins un segment (21) d'engagement dans la rainure.

14. Dispositif selon l'une quelconque des revendications précédentes, **caractérisé en ce que** le segment (21) d'engagement dans la rainure est configuré comme un tenon.

15. Dispositif selon l'une quelconque des revendications précédentes, **caractérisé en ce que** l'élément à tiroir (7) est disposé en étant solidaire en rotation.

16. Dispositif selon l'une quelconque des revendications précédentes, **caractérisé en ce que** l'élément à tiroir (7) présente au moins une rainure (30) de l'élément à tiroir servant à loger un élément antitorsion (31).

17. Dispositif selon l'une quelconque des revendications précédentes, **caractérisé en ce qu'**au moins un élément antitorsion (31) est configuré comme un tenon antitorsion.

18. Dispositif selon l'une quelconque des revendications précédente, **caractérisé en ce qu'**au moins un élément d'obturation (14) est configuré comme un piston.

19. Dispositif selon l'une quelconque des revendications précédentes, **caractérisé en ce qu'**au moins un ressort (17, 18) est disposé sur l'élément à tiroir (10), ressort qui est configuré et conçu de minière telle, qu'il puisse, en fonctionnement de secours, déplacer l'élément d'obturation (14).

20. Dispositif selon l'une quelconque des revendications précédentes, **caractérisé en ce que** le Dispositif (1) est configuré comme une électrovanne (1) comprenant au moins une électrovanne (1, VT1) comportant au moins un boîtier d'électrovanne.

21. échangeur de chaleur (AGK) servant au refroidissement des gaz d'échappement avec au moins un Dispositif (1, VT1) selon l'une quelconque des revendications 1 à 20.

22. Système comprenant au moins un dispositif (1, VP1) selon l'une quelconque des revendications 1 à 20 et/ou comprenant au moins un échangeur de chaleur (AGK) selon la revendication 21, présentant au moins un moteur à combustion interne (M) pour un véhicule, au moins une première turbine (T1) d'un turbocompresseur, où le dispositif (1, VP1) servant à la commande du flux de gaz d'échappement, côté entrée ou côté sortie de l'échangeur de chaleur (AGK), est disposé sur le côté haute pression de la première turbine (T1).

23. Système comprenant au moins un dispositif (1, VP1) selon l'une quelconque des revendications 1 à 20 et/ou comprenant au moins un échangeur de chaleur (AGK) selon la revendication 21, présentant au moins un moteur à combustion interne (M) pour un véhicule, au moins une première turbine (T1) d'un turbocompresseur, où le dispositif (1, VP1) servant à la commande du flux de gaz d'échappement, côté entrée ou côté sortie de l'échangeur de chaleur (AGK), est disposé sur le côté basse pression de la première turbine (T1).
